# EUROPEAN PATENT APPLICATION

(11) **EP 4 831 357 A1**
(43) Date of publication of application: **28.10.2026**
(21) Application number: 24908009.4
(22) Date of filing: 17.12.2024
(51) Int. Cl.: C25B 15/08, C25B 1/04, C25B 9/70

(54) **HYDROGEN VENT SYSTEM**

(30) Priority: 18.12.2023 KR 20230184562
(71) Applicant: POSCO Holdings Inc., Pohang-si, Gyeongsangbuk-do 37859 (KR)
(72) Inventor: YANG, Ye-Jin, Pohang-si, Gyeongsangbuk-do 37877 (KR); LEE, Sang-Hyeok, Pohang-si, Gyeongsangbuk-do 37877 (KR); SEONG, Byeong-Geun, Pohang-si, Gyeongsangbuk-do 37877 (KR); AHN, Jin-Soo, Pohang-si, Gyeongsangbuk-do 37877 (KR); KIM, Hyo-Won, Pohang-si, Gyeongsangbuk-do 37877 (KR); KIM, Sang-Kuk, Pohang-si, Gyeongsangbuk-do 37877 (KR)
(74) Representative: Pfenning, Meinig & Partner mbB
(86) International application number: PCT/KR2024/020487
(87) International publication number: WO 2025/135726

(57) **Abstract**

The present invention provides a hydrogen vent system for discharging hydrogen generated in a high-temperature water electrolysis stack to the outside, comprising: a first pipe unit connected to the high-temperature water electrolysis stack and having a curved portion; a drain line which is connected to the first pipe unit and through which condensed water is drained; and a discharge unit which is connected to the first pipe unit and which releases hydrogen upward into the air, wherein a surge tank that maintains pressure and moves the condensed water to the drain line is disposed in the first pipe unit.

## Description

### Technical Field

The present disclosure relates to a hydrogen vent system for a solid oxide electrolysis cell stack.

### Background Art

A hydrogen vent pipe is designed such that the hydrogen concentration is less than or equal to an explosive limit when hydrogen released during normal or emergency operation is discharged into the atmosphere without being combusted.

In the case of hydrogen discharge from a solid oxide electrolysis cell stack, the temperature of hydrogen passing through a downstream cooler of the solid oxide electrolysis cell stack is approximately 15 to 30°C, and since high-temperature gas is discharged, condensed water is generated in a vent pipe.

In this case, hydrogen is discharged in a dried state by passing through a heat exchanger and a cooler to minimize the condensed water content generated within the vent pipe. However, it is difficult to perfectly control the condensed water content of the vent gas due to factors such as the performance of the heat exchanger used for cooling and the temperature of cooling water caused by seasonal temperature differences.

Since inlet and outlet pipes of the solid oxide electrolysis cell stack pipe are connected, pressure buildup in the vent pipe due to the condensed water may cause the overall performance degradation of the solid oxide electrolysis cell stack.

Therefore, there is a need for a hydrogen vent system capable of treating the condensed water to maintain the solid oxide electrolysis cell stack in normal operation.

(Patent Document 1) Korean Patent No. 10-1309952 (September 11, 2013)

### Summary of Invention

### Technical Problem

An aspect of the present disclosure is to provide a hydrogen vent system capable of efficiently removing condensed water.

### Solution to Problem

The present disclosure provides a hydrogen vent system, formed as follows, to achieve the above objects.

According to an aspect of the present disclosure, a hydrogen vent system for discharging hydrogen generated in a solid oxide electrolysis cell stack to an outside includes: a first pipe unit connected to the solid oxide electrolysis cell stack and having a curved portion; a drain line connected to the first pipe unit and through which condensed water is drained; and a discharge unit connected to the first pipe unit and releasing hydrogen upwardly into the atmosphere, in which a surge tank that maintains pressure and moves the condensed water to the drain line is disposed in the first pipe unit.

In addition, the hydrogen vent system may further include a second pipe unit located between the first pipe unit and the discharge unit, and inclined downwardly toward the first pipe unit.

In addition, the surge tank may be provided in plural.

In addition, at least a portion of the drain line may be formed of a transparent pipe.

In addition, the discharge unit and the second pipe unit may be installed outdoors, and the second pipe unit may be wrapped with a thermal insulation material.

In addition, a pump located at an upstream of the surge tank and a valve located at an upstream of the pump may be disposed in the first pipe unit.

In addition, at least one of the first pipe unit, the second pipe unit, and the discharge unit may be formed of a material including stainless steel.

In addition, the first pipe unit, the second pipe unit, and the discharge unit may be connected by welding.

In addition, a sub-pipe, which is included in the first pipe unit and connects the connection portion between the first pipe unit and the second pipe unit to the surge tank, may be formed to be downwardly inclined toward the surge tank or formed without a slope.

### Advantageous Effects of Invention

According to an aspect of the present disclosure, by effectively treating condensed water generated in a hydrogen vent pipe, it is possible to maintain a normal operation of a solid oxide electrolysis cell stack, extend a lifespan of the solid oxide electrolysis cell stack, and maintain the performance of the solid oxide electrolysis cell.

### Brief Description of Drawings

FIG. 1 is a time-voltage graph evaluating a solid oxide electrolysis cell stack over a long period.
FIG. 2 is a diagram schematically illustrating a hydrogen vent system according to an embodiment of the present disclosure.
FIG. 3 is a graph showing the effect of the hydrogen vent system according to the present disclosure, where A represents the pressure of a hydrogen pipe according to an embodiment of the present disclosure, and B represents the pressure of a conventional hydrogen pipe.

### Mode for Invention

Specific embodiments of the present disclosure will be described below with reference to the attached drawings. However, it should be noted that the spirit of the present disclosure is not limited to the embodiments set forth herein and those skilled in the art and understanding the present disclosure can easily accomplish retrogressive disclosures or other embodiments included in the spirit of the present disclosure by the addition, modification, and removal of components within the same spirit, but those are construed as being included in the spirit of the present disclosure.

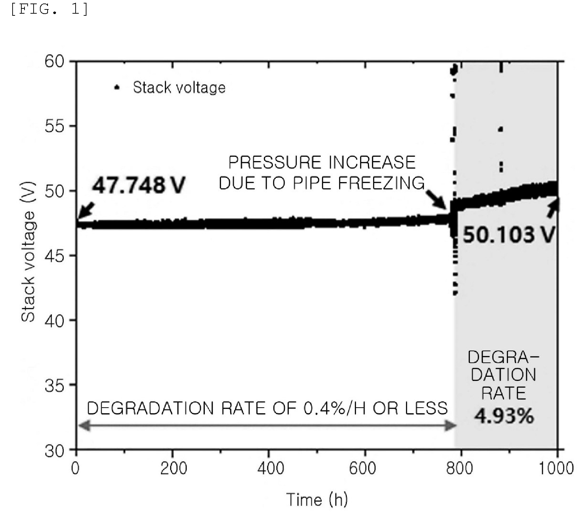

FIG. 1 is a time-voltage graph evaluating a solid oxide electrolysis cell stack over a long period.

A vent stack refers to a facility installed to safely release gases or vapors released during normal or emergency operation into the atmosphere without incineration.

Solid oxide electrolysis cell (SOEC) technology produces hydrogen and oxygen by directly electrolyzing high-temperature steam, and efficiency of the SOEC technology is higher than that of electrolysis of room-temperature or lowtemperature water. This is because the energy required for electrolysis is lower when the high-temperature steam is used than when the room-temperature water is used, and decreases as temperature increases. Therefore, when a lowcost heat source capable of raising the temperature of the room-temperature water is secured, the high-temperature water electrolysis technology may theoretically become the most efficient hydrogen production technology.

Preventing pressure imbalance between an inlet and an outlet of a SOEC stack is a critical factor for stable long-term operation of the SOEC stack.

When hydrogen produced by the SOEC is not fully utilized and is discharged, condensation of moisture in a hydrogen vent pipe (hereinafter referred to as a vent pipe) included in a hydrogen vent stack causes abnormal behavior in the SOEC stack (hereinafter referred to as the stack). When this phenomenon continues, stable long-term operation becomes impossible. Consequently, this leads to deterioration in the performance and efficiency of the stack.

Referring to FIG. 1, in an operating environment of 650 to 750°C and 0.7 to 1.4 A/cm², excellent performance is maintained for up to 800 hours with a degradation rate of less than 0.4%/h. However, beyond 800 hours, the degradation rate deteriorates to 4.93% due to a pressure increase caused by pipe freezing, which is more than ten times higher than the initial degradation rate of less than 0.4%/h. This deterioration in the degradation rate may be determined from the behavior of the pressure sensor, and it may be seen that the balance between the inlet and outlet pressures of the stack may have a significant impact on extending the stack lifespan. Therefore, the present disclosure aims to minimize pressure fluctuations by treating condensed water in the vent pipe so as to balance the inlet and outlet pressures of the stack.

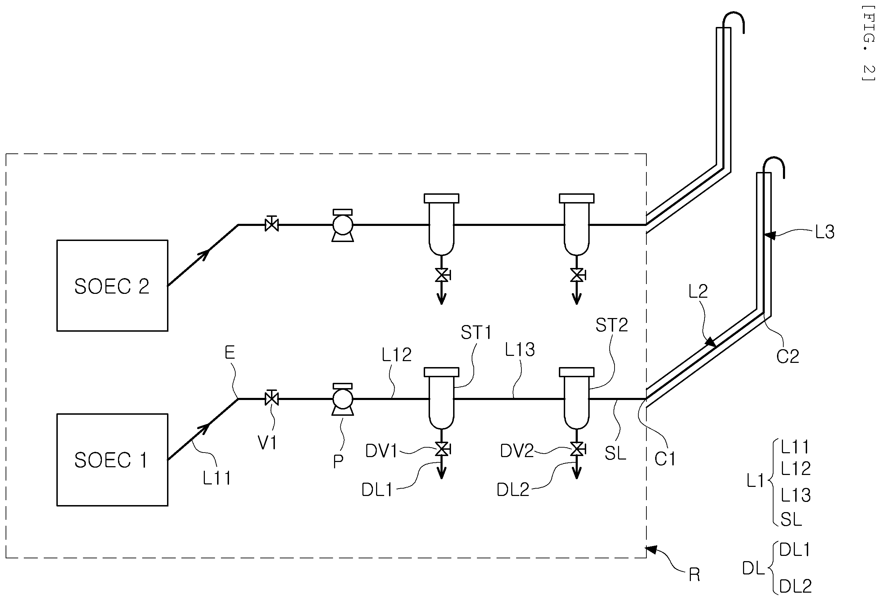

FIG. 2 is a diagram schematically illustrating a hydrogen vent system according to an embodiment of the present disclosure.

The hydrogen vent system according to an embodiment of the present disclosure relates to a pipe system through which hydrogen generated in the SOEC stack is discharged to the outside, and includes a first pipe unit L1, a drain line DL, and a discharge unit L3.

In the drawing, an area inside the dashed line represents an indoor space R, and an area outside the dashed line may represent an outdoor space.

The first pipe unit L1 is connected to the stack and forms a curved portion E.

The vent pipe through which hydrogen is discharged is connected to the SOEC stack and includes a curved portion in a portion connected to the stack to minimize direct impact on the stack in the event of problems such as flames in hydrogen gas.

The first pipe unit L1 is a portion located indoors and may not be equipped with a thermal insulation material for heat retention.

Additionally, the first pipe unit L1 may be connected to a hydrogen storage unit where hydrogen generated in the stack is stored, or to a branch pipe of a transport pipe that moves hydrogen from the stack to a use site. Since there are difficulties in storing unused hydrogen, it may be a pipe included in the hydrogen vent system for releasing hydrogen into the atmosphere.

In a case where a plurality of hydrogen vent pipes are provided, a distance between the first pipe units L1 may be at least 5 m so that the first pipe units L1 are disposed to minimize mutual influence even if a fire or explosion occurs in one pipe.

According to an embodiment of the present disclosure, surge tanks ST1 and ST2 may be located in the first pipe unit L1.

The surge tanks ST1 and ST2 are disposed in the first pipe unit L1 to maintain the pressure of the first pipe unit L1 and to remove condensed water formed in the first pipe unit L1.

The surge tanks ST1 and ST2 are formed as a tank having a free surface to remove the condensed water, and when a sudden pressure change occurs within the first pipe unit L1, water is discharged from the surge tanks ST1 and ST2 to regulate the pressure change.

For example, a plurality of surge tanks ST1 and ST2 may be provided.

The plurality of surge tanks ST1 and ST2 are disposed in the first pipe unit L1 so that the condensed water may be removed at sufficient points regardless of the length of the first pipe unit L1. In particular, the surge tanks ST1 and ST2 located close to the second pipe unit L2, which will be described below, may remove the condensed water formed in the second pipe unit L2 together.

According to an embodiment of the present disclosure, a pump P and a valve V1 may be further located in the first pipe unit L1.

The pump P may be located at an upstream of the surge tanks ST1 and ST2. In a case where condensed water is formed before the curved portion E and is not naturally movable to the surge tanks ST1 and ST2, pressure may be applied by power to move the condensed water to the surge tanks ST1 and ST2.

Additionally, a valve V1 is provided upstream of the pump P, and, in preparation for a case in which an issue occurs in hydrogen discharge, the valve V1 may be opened and closed so that hydrogen does not flow through the first pipe unit L1.

The drain line DL may be a pipe that is connected to the first pipe unit L1 and drains the condensed water formed within the hydrogen vent system.

The drain line DL is connected through the surge tanks ST1 and ST2, and thus the surge tanks ST1 and ST2 may be configured to connect the drain line DL from the first pipe unit L1 so that the condensed water may be moved to the drain line DL.

When the plurality of surge tanks ST1 and ST2 are provided, drain lines DL1 and DL2 may be formed from each surge tank ST1 and ST2.

When the first pipe unit L1 is connected to the drain line DL without the surge tanks ST1 and ST2, there is a problem in that it cannot adequately respond to sudden pressure changes caused by condensed water; therefore, the surge tanks ST1 and ST2 may be provided to allow the condensed water to flow to the drain line DL.

Differential pressure valves DV1 and DV2 may be formed between the drain line DL and the surge tanks ST1 and ST2. When the pressure inside the surge tanks ST1 and ST2 increases, the differential pressure valves DV1 and DV2 are configured to open toward the drain line DL, thereby allowing movement in only one direction.

For example, at least a portion of the drain line DL may be formed as a transparent pipe.

As an example of a transparent material, a pipe formed of polytetrafluoroethylene (PTFE) may be used, and a heatresistant material such as a non-flammable fluoropolymer may be more advantageous.

By forming the drain line DL transparently, the discharge of the condensed water may be observed with the naked eye, making maintenance easier. Since problems such as freezing may occur when the drain line DL is connected to the outside, such problems may be easily prevented.

The discharge unit L3 is a chimney that is connected to the first pipe unit L1 and discharges hydrogen into the air.

Since there is always a risk of fire when discharging hydrogen, a fire may occur in the discharge unit L3. In addition, since the possibility of hydrogen exploding in the air is unavoidable, the discharge unit L3 may be formed to discharge hydrogen into the air rather than toward the ground.

Unlike the first pipe unit L1, the discharge unit L3 is provided outdoors. Condensed water may be generated in the discharge unit L3, and when the condensed water is frozen, hydrogen discharge may be difficult; therefore the discharge unit L3 may be wrapped with a thermal insulation material.

The thermal insulation material should preferably possess non-flammability and durability in addition to a thermal insulation function, and may preferably have soundabsorbing properties, since a loud noise may be generated in the event of hydrogen explosion.

When condensed water is generated in the discharge unit L3, the discharge unit L3 is configured as a chimney having a height that enables the upward discharge of hydrogen into the air, such that the condensed water is naturally allowed to flow from the inside of the discharge unit L3 to the first pipe unit L1.

The hydrogen vent system according to one embodiment of the present disclosure further includes the second pipe unit L2 located between the first pipe unit L1 and the discharge unit L3.

The second pipe unit L2 is located between the first pipe unit L1 and the discharge unit L3 and is formed to be downwardly inclined toward the first pipe unit L1. The second pipe unit L2 may be formed outdoors and forms a downward slope so that the condensed water generated in the second pipe unit L2 and the discharge unit L3 may easily flow into the surge tanks ST1 and ST2 located in the first pipe unit L1 and the drain line DL connected thereto.

The second pipe unit L2 may be located outdoors. Therefore, similar to the discharge unit L3, the second pipe unit L2 may be wrapped with the thermal insulation material to prevent the condensed water from freezing inside and blocking the pipe.

Through this, pressure increase in the stack due to condensation is prevented, and the discharge unit L3 may be formed by extending to a point where hydrogen can be discharged.

According to an embodiment of the present disclosure, the first pipe unit L1, the second pipe unit L2, or the discharge unit L3 may be formed of a material including stainless steel.

For example, it may be 300 series austenitic stainless steel, and in particular 304 stainless steel may be suitable for handling hydrogen at room temperature.

Since the pipe is for handling hydrogen, the pipe having a low melting point or being susceptible to corrosion by hydrogen may have problems in durability and stability, and thus may be formed of stainless steel.

According to an embodiment of the present disclosure, the first pipe unit L1, the second pipe unit L2, and the discharge unit L3 may be connected by welding.

Since hydrogen flows through the first pipe unit L1, the second pipe unit L2, and the discharge unit L3, connection portions C1 and C2 may be formed by welding. Since hydrogen leakage in the middle may cause safety issues, the pipes may be connected by welding to prevent hydrogen leakage. When the welding is difficult, the pipes may be connected in a manner enabling a tight connection.

According to an embodiment of the present disclosure, a pipe located at a portion the connection portion and the surge tanks ST1 and ST2 and the surge tanks ST1 and ST2, with respect to the connection portion C1 connecting the first pipe unit L1 and the second pipe unit L2, is defined as a sub-pipe SL, and the sub-pipe SL may be formed to be downwardly inclined toward the surge tanks ST1 and ST2 or to have no slope.

In order to allow the condensed water formed in the second pipe unit L2 and the discharge unit L3 to be smoothly discharged from the surge tanks ST1 and ST2 connected to the sub-pipe SL, the sub-pipe SL may be formed to be inclined toward the surge tanks ST1 and ST2 or to be at least horizontal, thereby preventing backflow of the condensed water.

The first pipe unit L1 may be divided into a plurality of sub-pipes, and may be, for example, a first sub-pipe SL1 between the stack and the pump P, a second sub-pipe SL2 between the pump P and the first surge tank ST1, a third sub-pipe SL3 between the first surge tank ST1 and the second surge tank ST2, and a sub-pipe SL between the second surge tank ST2 and the connection portion C1. A slope may also be formed in the lower pipe so that the condensed water formed in the first pipe unit L1 may be moved to the first surge tank ST1 or the second surge tank ST2.

The above description is illustrative, and is not limited to the aforementioned numerical values, shapes, and the like, and includes all modifications that can be readily made by those skilled in the art.

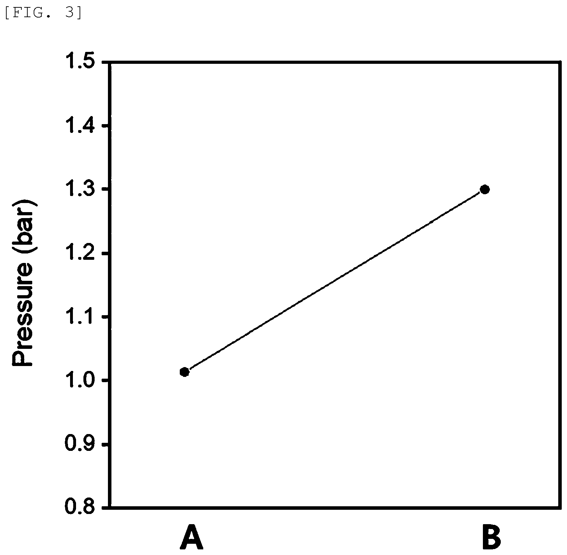

FIG. 3 is a graph showing the effects of the hydrogen vent system according to the present disclosure.

A represents a case in which a hydrogen vent system according to an embodiment of the present disclosure is provided, and B represents as a case in which a hydrogen vent system is provided so that hydrogen is directly discharged without the surge tanks ST1 and ST2, etc., as in a conventional system, thereby showing pressure within the system.

In the case of A, the pressure is maintained at approximately 1.0 bar, which is almost similar to atmospheric pressure, and it may be seen that there is no pressure difference between the inlet and outlet pipes of the SOEC stack. However, in the case of B, the pressure approaches 1.3 bar, resulting in a higher pressure on the outlet side, and thus the degradation rate increases, which may adversely affect long-term operation.

As such, according to an embodiment of the present disclosure, by effectively treating the condensed water generated in the hydrogen vent pipe, it is possible to maintain the normal operation of the SEOC stack, extend the lifespan of the SEOC stack, and maintain the performance of the SEOC.

While example embodiments have been shown and described above, it will be apparent to those skilled in the art that modifications and variations could be made without departing from the scope of the present disclosure as defined by the appended claims.

## Claims

1. A hydrogen vent system for discharging hydrogen generated in a solid oxide electrolysis cell stack to an outside, comprising:
a first pipe unit connected to the solid oxide electrolysis cell stack and having a curved portion;
a drain line connected to the first pipe unit and through which condensed water is drained; and
a discharge unit connected to the first pipe unit and releasing hydrogen upwardly into the atmosphere,
wherein a surge tank that maintains pressure and moves the condensed water to the drain line is disposed in the first pipe unit.

2. The hydrogen vent system of claim 1, further comprising:
a second pipe unit located between the first pipe unit and the discharge unit, and inclined downwardly toward the first pipe unit.

3. The hydrogen vent system of claim 1, wherein the surge tank is provided in plural.

4. The hydrogen vent system of claim 1, wherein at least a portion of the drain line is formed of a transparent pipe.

5. The hydrogen vent system of claim 2, wherein the discharge unit and the second pipe unit are installed outdoors, and the second pipe unit is wrapped with a thermal insulation material.

6. The hydrogen vent system of claim 3, wherein a pump located at an upstream of the surge tank and a valve located at an upstream of the pump are disposed in the first pipe unit.

7. The hydrogen vent system of claim 2, wherein at least one of the first pipe unit, the second pipe unit, and the discharge unit is formed of a material including stainless steel.

8. The hydrogen vent system of claim 2, wherein the first pipe unit, the second pipe unit, and the discharge unit are connected by welding.

9. The hydrogen vent system of claim 2, wherein a sub-pipe, which is included in the first pipe unit and connects the connection portion between the first pipe unit and the second pipe unit to the surge tank, is formed to be downwardly inclined toward the surge tank or formed without a slope.
